# EUROPÄISCHE PATENTANMELDUNG

(11) **EP 1 353 428 A2**
(43) Veröffentlichungstag der Anmeldung: **15.10.2003**
(21) Anmeldenummer: 03002626.4
(22) Anmeldetag: 10.02.2003
(51) Int. Cl.: H02H 5/10, H02H 3/253

(54) **Leiterunterbrechungs-Schutzschaltung**

(30) Priorität: 12.04.2002 DE 10216311
(71) Anmelder: Heinrich Kopp AG, 63796 Kahl am Main (DE)
(72) Erfinder: Fleckenstein, Hans, Jürgen, 63796 Kahl am Main (DE); Holscher, Norbert, Dipl.-Ing., 63796 Kahl am Main (DE)
(74) Vertreter: Reinhard - Skuhra - Weise & Partner

(57) **Zusammenfassung**

Leiterunterbrechungs- Schutzschaltung mit: einer Auslösespule (9) zum Auslösen eines elektrischen Kontaktes, in Abhängigkeit eines durch die Auslösespule (9) hindurchfließenden Halte-Spulenstromes (I_{H}); und einer Überspannungsschutzeinrichtung (14, 33) zum Schützen der dazu parallelliegenden Auslösespule (9) vor Überspannungen und / oder Überströmen; wobei der bei einer Unterbrechung eines Leiters (4, 6) abfallende Halte-Spulenstrom (I_{H}) über die Auslösespule (9) einen Schutzschalter (7) auslöst.

## Beschreibung

Die Erfindung betrifft eine Leiterunterbrechungs-Schutzschaltung, und insbesondere eine Schutzschaltung zum Auslösen eines ein- oder mehrpoligen Schutzschalters.

Aus der DE 199 19 331 A1 ist ein Unterspannungsauslöser bekannt, welcher das Funktionsprinzip aufweist, dass nach Ausfall einer der drei Phasen L1, L2 oder L3 entsprechend der in einem Gleichstromkreis abfallenden Gleichspannung U_{N} ein darin fließender Gleichstrom absinkt, so dass eine von diesem Strom durchflossene elektromagnetische Auslösevorrichtung ein Auslöserelais auslöst, wenn die durch den Stromfluss generierte Haltekraft kleiner als eine Rückstellkraft ist. Diese Vorrichtung reagiert zum einen nur auf den Ausfall einzelner Phasen und nicht des Neutralleiters, und zum anderen weist sie den weitern Nachteil auf, dass sie keinen wirksamen und insbesondere schnellen Überspannungsschutz bereitstellt.

Beim Ausfall eines elektrischen Leiters, insbesondere des Neutralleiters (N- Leiters), in einem Bereich einer elektrischen Anlage können jedoch Überspannungen auftreten, welche sowohl elektrische als auch elektronische Geräte beschädigen oder zerstören können. Um diese Überspannungen zu vermeiden und die elektrischen bzw. elektronischen Verbraucher in einem Bereich einer solchen Anlage zu schützen, ist eine Abschaltung dieses Bereichs erforderlich.

Es ist daher die Aufgabe der vorliegenden Erfindung, eine Schutzschaltung bereitzustellen, die abhängig von der Unterbrechung eines elektrischen Leiters eine zuverlässige Abschaltung der Spannungsversorgung, insbesondere bei auftretenden Überspannungen, gewährleistet.

Erfindungsgemäß wird diese Aufgabe durch die im Anspruch 1 angegebene Schutzschaltung gelöst.

Die der Erfindung zugrundeliegende Lösung besteht darin, bei Ausfall eines beliebigen Leiters bei einer 3- phasigen Schutzschaltung die Spannungsversorgung des jeweiligen Bereichs, in dem die Störung auftritt, zu unterbrechen.

In der Erfindung wird das eingangs erwähnte Problem insbesondere dadurch gelöst, dass eine Schutzschaltung mit einer Auslösespule, die mittels eines durchfließenden Halte-Spulenstroms gehalten wird, bei Ausfall eines Leiters eine zuverlässige Abschaltung der aktiven Phasen und des Neutralleiters gewährleistet.

Weitere Ausgestaltungen der Erfindung ergeben sich aus den Unteransprüchen.

Ausführungsbeispiele der Erfindung sind in den Zeichnungen dargestellt und in der nachfolgenden Beschreibung näher erläutert.

Es zeigen:
- Fig. 1: einen Schaltplan zur Erläuterung einer Ausführungsform der vorliegenden Erfindung; und
- Fig. 2: einen Schaltplan einer bereits vorgeschlagenen Ausbildung.

In den Figuren bezeichnen gleiche Bezugszeichen gleiche oder funktionsgleiche Bestandteile.

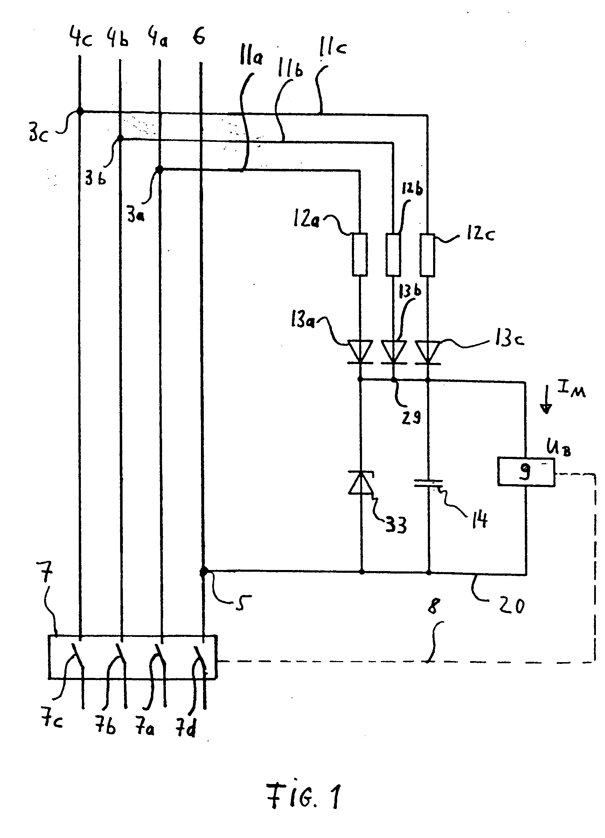

In Fig. 1 ist ein Schaltplan zur Erläuterung einer ersten Ausführungsform der vorliegenden Erfindung dargestellt.

Fig. 1 zeigt eine dreiphasige Anordnung zur Abschaltung eines an eine Schutzschaltung angeschlossenen Stromkreises bei Unterbrechung eines Nullleiters 6. Drei mit 4a, 4b, 4c bezeichnete Phasen sind über Knoten 3a, 3b, 3c mit Leitungen 11a, 11b, 11c verbunden. Über jeweils eine pro Phase vorgesehene Reihenschaltung aus einem Widerstand 12a, 12b, 12c und einer Diode 13a, 13b, 13c werden die drei Phasen 4a, 4b, 4c im Stern mit einem Sternpunkt 29 geschaltet. Die drei Phasen 4a, 4b, 4c sind gemäß Fig. 1 mit einer Schalteinrichtung 7 verbunden. Eine Z- Diode 33 dient der Vermeidung von Überspannungen bzw. der Spannungsbegrenzung an einer parallel liegenden Auslösespule 9.

Die Auslösespule 9 ist mittels einer Leitung 20 und dem Knoten 5 an den Nullleiter 6 angebunden. Mittels einer Kapazität 14, die insbesondere einer ausreichenden Siebung und auch als Energiespeicher zur Verhinderung einer ungewollten Auslösung bei kurzen Netzunterbrechungen dient, wird die sich bei normalem Betrieb im Sternpunkt 29 gegenüber Masse einstellende wellige Gleichspannung U_{B} geglättet und treibt einen Halte-Spulenstrom I_{H} durch die Auslösespule 9. Fällt der Nullleiter 6 der Anordnung aus (Unterbrechung), so sinkt der Stromfluss I_{H} durch die Auslösespule 9 entsprechend der Entladung des Kondensators 14 ab, und der Halte-Spulenstrom I_{H} reicht ab einer vorbestimmten Grenzstromstärke nicht mehr aus, um einen durch die Auslösespule 9 angezogenen Relaiskontakt, der nicht explizit dargestellt ist, anzuziehen. Folglich fällt der Relaiskontakt der Auslösespule 9 ab, so dass die Schaltkontakte 7a-d der Schalteinrichtung 7 über eine, insbesondere mechanische, Verbindungseinrichtung 8 geöffnet und der gesamte an die Schutzschaltung 1 angeschlossene Stromkreis spannungsfrei wird, um insbesondere Defekten an elektrischen bzw. elektronischen Verbrauchern vorzubeugen. Vorzugsweise ist dieAuslösespule (9) durch ein Unterspannungsrelais und/oder ein entmagnetisiertes RCD-Relais gebildet.

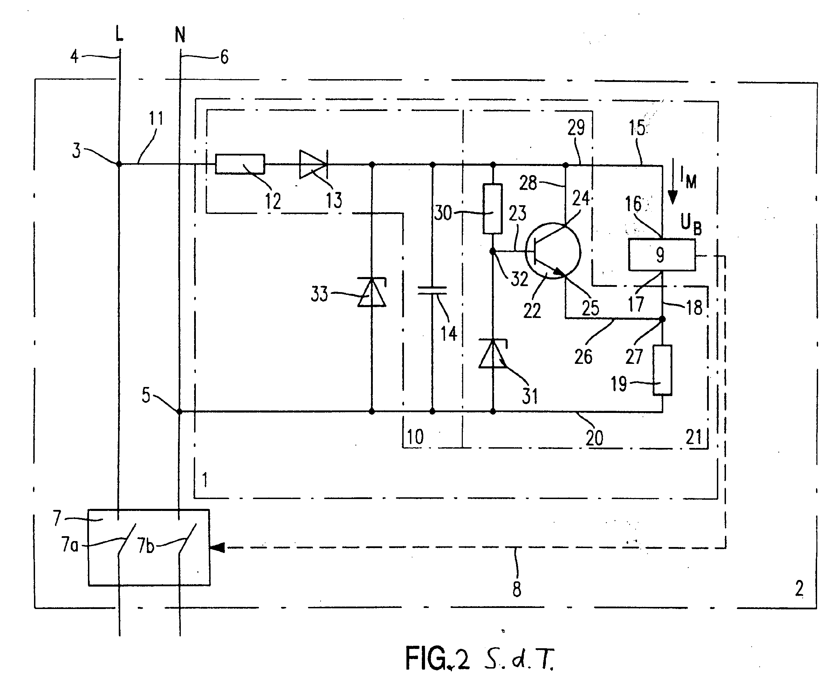

In Fig. 2 ist ein Schaltplan zur Erläuterung einer bereits vorgeschlagenen Schaltung (DE 101 28 328) dargestellt.

Fig. 2 zeigt eine einphasige Ausführung einer Schutzschaltung 1 innerhalb eines Leiterunterbrechungsauslösers 2. Die Schutzschaltung 1 ist über einen Knoten 3 an einen Phasenleiter 4 und über einen Knoten 5 an einen Nullleiter 6 angeschlossen. An den Phasenleiter 4 und den Nullleiter 6 ist eine Schalteinrichtung 7 angeschlossen, deren Schaltkontakte 7a, 7b zur Unterbrechung der Leiter 4, 6 über eine Leitung 8 mechanisch ansteuerbar sind.

Die Schutzschaltung 1 enthält eine Auslösespule 9, die in einem normalen Betriebsmodus mit einer Betriebsgleichspannung U_{B} versorgt wird. Die Betriebsgleichspannung wird durch eine Spannungsversorgungsschaltung 10 erzeugt. Die Spannungsversorgungsschaltung 10 ist über eine Leitung 11 und dem Knoten 3 mit dem Phasenleiter 4 und über eine Leitung 20 und dem Knoten 5 mit dem Neutralleiter 6 verbunden und richtet die anliegende Wechselspannung über einen Widerstand 12 und eine Gleichrichterdiode 13 gleich. Die gleichgerichtete Wechselspannung dient zum Aufladen eines Kondensators 14 innerhalb der Spannungsversorgungsschaltung 10, der die gleichgerichtete Wechselspannung glättet und die Auslösespule 9 über eine Leitung 15 an einem Anschluss 16 mit der Betriebsgleichspannung U_{B} versorgt. Der andere Anschluss 17 der Auslösespule 9 liegt über eine Leitung 18, einen Widerstand 19 und eine Leitung 20 an dem Nullleiter 6 an.

Durch die Auslösespule 9 fließt in einem normalen Betriebsmodus ein Halte-Spulenstrom I_{H}, der dafür sorgt, dass die Auslösespule 9 nicht auslöst. Wird der Nullleiter 6, z.B. durch eine Störung, unterbrochen, sinkt auch die Betriebsgleichspannung U_{B} zur Versorgung der Auslösespule 9 ab, so dass der Halte-Spulenstrom I_{H} abfällt. Sobald der Halte-Spulenstrom einen vorgegebenen Minimalwert unterschreitet, löst die Auslösespule 9 aus und öffnet die Schaltkontakte 7a, 7b.

Die Schutzschaltung 1 enthält gemäß Fig. 2 eine Spulenstromüberwachungsschaltung 21, die bei einem Abfallen des durch die Auslösespule 9 fließenden Halte-Spulenstromes I_{H} das Abfallen des Halte-Spulenstromes beschleunigt. Die Spulenstromüberwachungsschaltung 21 weist einen Transistor 22 mit einem Basisanschluss 23, einem Kollektoranschluss 24 und einem Emitteranschluss 25 auf.

Bei der in Fig. 2 dargestellten Form ist der Transistor 22 ein Bipolartransistor. Bei einer alternativen Ausführungsform ist der Transistor 22 ein Feldeffekttransistor. Der Emitteranschiuss 25 des Transistors 22 ist über eine Leitung 22 und einen Knoten 27 mit der Leitung 18 verbunden. Der Kollektoranschluss 24 des Transistors 22 liegt über eine Leitung 28 und einen Knoten 29 an der Leitung 15 an. Zwischen der Leitung 15 und der Leitung 20 liegt eine Serienschaltung, die aus einem Widerstand 30 und einer Z-Diode 31 besteht. Ein Verbindungsknoten 32 zwischen dem Widerstand 30 und der Z-Diode 31 ist mit dem Basisanschluss 23 des Transistors 22 verbunden. Die Kollektoremitterstrecke zwischen dem Kollektoranschluss 24 und dem Emitteranschluss 25 des Transistors 22 ist parallel zu der Auslösespule 9 geschaltet.

Die Schutzschaltung 1 enthält neben der Auslösespule 9, der Spannungsversorgungsschaltung 10 und der Spulenstromüberwachungsschaltung 21 zusätzlich eine weitere Z-Diode 33 zur Spannungsbegrenzung, die zum Kondensator 14 parallelgeschaltet zwischen den Leitungen 15, 20 liegt.

Die Spulenstromüberwachungsschaltung 21 überwacht den in der Auslösespule 9 fließenden Halte-Spulenstrom I_{H}, wobei sie ein Abfallen des Halte-Spulenstromes I_{H} beschleunigt. Ist der Halte-Spulenstrom I_{H} durch die Auslösespule 9 ausreichend hoch, sperrt der Transistor 22, da der Spannungsabfall über den Emitter-Widerstand 19 höher ist als die Spannung an der Z-Diode 31. Sinkt der durch die Auslösespule 9 fließende HalteStrom I_{H}, der auch durch den Emitterwiderstand 19 fließt, durch eine Unterbrechung des N-Leiters 6 ab, sinkt die Spannung, die an dem Widerstand 19 abfällt, so dass der Transistor 22 langsam leitend wird bzw. aufgesteuert wird. Hierdurch fließt ein Teilstrom über die Kollektoremitterstrecke des Transistors 22 und reduziert zusätzlich den durch die Auslösespule 9 fließenden Haltestrom. Erreicht die an dem Widerstand 19 anliegende Spannung einen Spannungswert, der kleiner ist als die an der Z-Diode 31 anliegende Spannung abzüglich der Basisemitterspannung zwischen dem Basisanschluss 22 und dem Emitteranschluss 25 des Transistors 22, schließt der Transistor 22 die Auslösespule 9 vollständig kurz.

Obwohl die vorliegende Erfindung vorstehend anhand eines bevorzugten Ausführungsbeispiels beschrieben ist, ist sie darauf nicht beschränkt, sondern auf vielfältige Art und Weise modifizierbar.

### Bezugszeichenliste

- 1: Schutzschaltung
- 2: Leitungsunterbrechungsschalter
- 3: Knoten (Anbindung der Leitungen 11a-c an die Phasen 4a-c)
- 4: Phasenleiter (4a-c)
- 5: Knoten
- 6: Nullleiter (N-Leiter)
- 7: Schalteinrichtung (mit Schaltkontakten 7a, 7b, 7c, 7d)
- 8: Auslöseanbindung
- 9: Auslösespule
- 10: Spannungsversorgungsschaltung
- 11: Anschlussleitung (11a-c)
- 12: Widerstand (12a-c)
- 13: Diode (13a-c)
- 14: Kondensator
- 15: Leitung
- 16: erster Anschluss der Auslösespule
- 17: zweiter Anschluss der Auslösespule
- 18: Leitung
- 19: Widerstand
- 20: Leitung
- 21: Spulenstromüberwachungsleitung
- 22: Transistor
- 23: Leitung
- 24: Kollektoranschluss
- 25: Emitteranschluss
- 26: Leitung
- 27: Knoten
- 28: Leitung
- 29: Knoten
- 30: Widerstand
- 31: Zehnerdiode
- 32: Knoten
- 33: Zehnerdiode

## Patentansprüche

1. Leiterunterbrechungs-Schutzschaltung mit:
einer Auslösespule (9) zum Auslösen eines elektrischen Kontaktes in Abhängigkeit eines durch die Auslösespule (9) hindurchfließenden Halte-Spulenstromes (I_{H}); und
einer Überspannungsschutzeinrichtung (14, 33) zum Schützen der dazu parallelliegenden Auslösespule (9) vor Überspannungen und/oder Überströmen;
wobei der bei einer Unterbrechung eines Leiters (4, 6) abfallende Halte-Spulenstrom (I_{H}) über die Auslösespule (9) einen Schutzschalter (7) auslöst, **dadurch gekennzeichnet, dass** der Schutzschalter (7) an drei Phasenleiter (4a, 4b, 4c) und einen Nullleiter (6) angeschlossen ist, und dass in Anschlussleitungen (11a, 11b, 11c) zwischen den Phasenleitern (4a, 4b, 4c) sowie Nullleiter (6) und einer Parallelschaltung aus Auslösespule (9) sowie Überspannungsschutzeinrichtung (14, 33) jeweils eine Gleichrichterdiode (13a, 13b, 13c) mit vorgeschaltetem Widerstand (12a, 12b, 12c) vorgesehen ist.

2. Leiterunterbrechungs-Schutzschaltung nach Anspruch 1, **dadurch gekennzeichnet,**
**dass** die Auslösespule (9) durch ein Unterspannungsrelais gebildet ist.

3. Leiterunterbrechungs- Schutzschaltung nach Anspruch 1, **dadurch gekennzeichnet,**
**dass** die Auslösespule (9) ein entmagnetisiertes RCD- Relais ist.
